# EUROPÄISCHE PATENTSCHRIFT

(11) **EP 0 863 253 B1**
(45) Veröffentlichungstag und Bekanntmachung des Hinweises auf die Patenterteilung: **08.09.2004**
(21) Anmeldenummer: 98101970.6
(22) Anmeldetag: 05.02.1998
(51) Int. Cl.: D21C 9/18, D21F 1/78, D21F 1/80

(54) **Verfahren zum Eindicken einer Faserstoffsuspension**
Process to thicken a fiber suspension
Procédé pour épaissir une suspension de fibres

(30) Priorität: 06.03.1997 DE 29704062 U
(43) Veröffentlichungstag der Anmeldung: 09.09.1998
(73) Patentinhaber: Voith Paper Patent GmbH, 89522 Heidenheim (DE)
(72) Erfinder: Gommel, Axel, 88212 Ravensburg (DE); Sepke, Paul-Wilhelm, 88214 Ravensburg-Weissenau (DE)

(56) Entgegenhaltungen:
- WO-A-94/08088
- DE-U- 7 519 093
- FR-A- 1 540 383
- US-A- 1 421 364
- US-A- 4 750 340
- US-A- 4 995 988

## Beschreibung

Die Erfindung betrifft ein Verfahren zum Eindicken einer Faserstoffsuspension gemäß dem Oberbegriff des Anspruchs 1.

Derartige Verfahren werden angewendet, um entweder die Stoffdichte der Faserstoffsuspension zu erhöhen oder um unerwünschte Bestandteile durch Waschen aus der Faserstoffsuspension zu entfernen. Dabei sind beide Vorgänge mehr oder weniger stark miteinander verbunden, denn zum Waschen einer Faserstoffsuspension ist selbstverständlich das Entwässern notwendig. Dabei gehen Waschverfahren meist von relativ geringen Anfangsstoffdichten (1 - 3 %) aus. Anderseits hängt aber das Ausmaß des Wascheffektes von weiteren Parametern, also nicht nur der Erhöhung der Stoffdichte, ab.

Verfahren der oben genannten Art können mit verschiedenen bekannten Vorrichtungen zum Eindicken einer Faserstoffsuspension ausgeführt werden. Die wichtigsten sind Trommeleindicker, Siebpressen verschiedenster Art sowie Filterpressen.

Bei einer Siebpresse wird die Faserstoffsuspension zwischen ein Sieb und eine Walze oder zwischen zwei Sieben eingeführt und gepreßt, so daß das Wasser austritt. Das Einführen der Suspension erfolgt dabei entweder durch einen Stoffkasten, aus dem die Suspension in den Bereich des oder der Siebe herausläuft oder durch einen Stoffauflauf, der einen Freistrahl bildet. Aus technischen Gründen, z.B. wegen der Abdichtprobleme kann der Stoffkasten nicht bei zu dünnen Stoffdichten der Suspension eingesetzt werden.

Trommeleindicker bilden auf der Außenseite einer in die Suspension eintauchenden Trommel ein Faservlies, das in das Innere der Trommel entwässert wird. Die Suspension kann eine relativ geringe Stoffdichte haben. Durch die Umfangsbewegung einer solchen Trommel wird das Faservlies aus dem Suspensionsbehälter heraustransportiert und kann als eingedickter Stoff entnommen werden. Er wird dann oft als Gutstoff bezeichnet. Es sind auch schon Maßnahmen zur weiteren Erhöhung der Stoffdichte des aus der Suspension bereits herausgeführten, noch an der Trommel haftenden Stoffes durchgeführt worden. Hierzu werden insbesondere sogenannte Gautschwalzen verwendet, die einen zusätzlichen Druck auf das Faservlies erbringen. Oder man preßt ein umlaufendes Band gegen das Vlies, wie z.B. gemäß US 2,278,525 oder WO 94/08088. Solche Maßnahmen bringen zwar in der Regel eine weitere Erhöhung der Stoffdichte, diese ist aber oft immer noch zu gering und wird außerdem z.B. durch Rückbefeuchtung beim Austritt aus dem Preßspalt zum Teil wieder reduziert.

Bei einem Trommeleindicker gemäß US 1,421,364 ist der Trog im Betrieb vollständig mit Suspension gefüllt. Die polygonförmige Außenfläche der Trommel fördert den eingedickten Stoff entlang gewölbter Dichtflächen heraus.

WO 96/08660 beschreibt eine weitere Entwässerungsvorrichtung. Diese enthält ebenfalls eine rotierende Trommel mit durchlässiger Oberfläche. Auf einem Teil des Umfanges ist die Trommel von einem undurchlässigen Kunststoffband umgeben. Die Suspension wird mit Hilfe eines Stoffauflaufes in den sich zwischen Trommel und Kunststoffband bildenden Spalt eingespritzt. In diesem Bereich, in dem der Stoffstrahl an die Trommelwandung gelangt, wird von innen ein Unterdruck angelegt. Diese Maschine ist sehr aufwendig zu bauen und zu betreiben.

Die US 4,750,340 zeigt eine zum Eindicken geeignete Vorrichtung mit einer drehbar angetriebenen, perforierten Trommel, welche durch ein gewölbtes Blech umgeben ist, das geringfügig exzentrisch zur Trommel angebracht ist. Dadurch bildet sich zwischen Trommel und der Wand ein Preßspalt, in den bereits voreingedickter Stoff über eine Förderschnecke eingetragen wird. Die Vorrichtung ist sehr aufwendig und besonders für höhere Ausgangsstoffdichten geeignet.

Aus der US-A-4 995 988 ist ein Verfahren zum Waschen und Eindicken bekannt. Dabei wird die Faserstoffsuspension über einen Stoffauflaufkasten an einen rotierenden Siebzylinder herangebracht, wodurch im Zusammenwirken mit einer dem Siebzylinder gegenüberliegenden feststehenden starren Wand eine Bahn geformt wird. Diese wird anschließend verdünnt (gewaschen) und dann wieder eingedickt.

Der Erfindung liegt die Aufgabe zugrunde, ein Verfahren der eingangs genannten Art zu finden und derart zu gestalten, daß eine gute Entwässerungsleistung bei hoher Betriebssicherheit erzielt wird.

Diese Aufgabe wird durch die Kennzeichen des Anspruchs 1 erfüllt.

Der Eindickung geht eine Voreindickung voran, wozu in speziellen Ausführungsformen des Verfahrens dieselbe Maschine verwendet werden kann, auf der auch die eigentliche Eindickung erfolgt. Wenn mit Hilfe des erfindungsgemäßen Verfahrens eine Wäsche des Papierfaserstoffs beabsichtigt wird, also die Entfernung von unerwünschten Stoffen zusammen mit der ausgepreßten Flüssigkeit, ist bekanntlich eine niedrige Ausgangsstoffdichte besonders vorteilhaft.

Ein beträchtlicher Vorteil des neuen Verfahrens liegt darin, daß die Eindickung an einer bereits gebildeten Faserstoffschicht vorgenommen wird, deren Stoffdichte zum einen relativ hoch und zum anderen gleichmäßig über die Dicke der Faserstoffschicht verteilt ist. Die Faserstoffschicht ist nicht zwangsläufig gleichmäßig, in der Art wie sie auf einer Papiermaschine gebildet wird. Je nach Zugabebedingungen kann sie auch als zerrissene Schicht in flächigen Stücken vorliegen.

Wie bereits erwähnt, kann das Verfahren z.B. mit einer Siebpresse durchgeführt werden. Die geforderte Stoffdichte der Faserstoffschicht von mindestens 4 % Trockengehalt ermöglicht dann die Verwendung des an sich einfacheren und energetisch günstigeren Stoffkastens.

Ein günstiges Waschverfahren unter Anwendung der Erfindung in Kombination mit einer Vorentwässerung ist folgendes Beispiel: Die Suspension, die der Vorentwässerung zugeführt wird, hat eine Stoffdichte, die etwa zwischen 0.5 und 2 % liegt. Abweichend von üblichen Verfahren werden aber die Parameter der Vorentwässerung so gewählt, daß eine relativ niedrige Entaschung erfolgt, also eine hohe Retention erhalten bleibt. Das läßt sich z.B. durch ein hohes Flächengewicht erreichen, wobei zu berücksichtigen ist, daß die Vorentwässerung an den nicht relativ zueinander bewegten Flächen erfolgt. Dann sinkt der Entaschungseffekt schon bei Flächengewichten über 40 g/m² (otro) deutlich ab. Bisher wird in der Regel gerade bei der Vorentwässerung die Entaschung schon relativ groß gewählt, weil sie infolge der großen abgeführten Wassermengen in dieser Phase besonders leicht erreichbar ist. Erfindungsgemäß wird aber in dem Entwässerungsspalt mit relativ bewegten Flächen wegen der darin herrschenden Scherkräfte auch bei höherer Stoffdichte, also über 4 % eine durchaus starke Entaschung erreicht. Der besondere Vorteil der Erfindung liegt dann darin, daß im Entwässerungsspalt aufgrund der höheren Stoffdichte und der Kompaktheit des Stoffes die Fasern zurückgehalten werden können, und zwar im Gegensatz zur Dünnstoffwäsche, also bei der Vorentwässerung.

In dem Entwässerungsspalt, in dem ein Sieb, Band oder Preßschuh derart angebracht ist, daß sich zwischen Trommelwand und dem Sieb eine Relativgeschwindigkeit ergibt, kann die dazwischen befindliche Faserstoffschicht durch Scherkräfte aufgelockert und zerrissen werden.

Je nach eingestellten Bedingungen ist es möglich, daß die Faserstoffschicht im Entwässerungsspalt aufreißt und Agglomerate bildet, die dann eine Rollbewegung ausführen. Diese Rollbewegung führt zu einer besonders wirksamen Kompaktierung des Faserstoffes. Es hat sich auch gezeigt, daß in vielen Fällen der Durchmesser der so gebildeten Röllchen größer wird als die Dicke der sie umgebenden eingedickten Faserstoffschicht. Dadurch konzentriert sich dann die Preßwirkung besonders auf die Röllchen und trägt zur gesteigerten Entwässerung der Röllchen bei. Wenn auch die zweite Fläche wasserdurchlässig gewählt ist, kann das durch sie hindurchgetretene Wasser in den Bereich abfließen, der in Laufrichtung (der ersten Fläche) gesehen, später liegt und dort wieder durch die zweite Fläche zurückfließen. Da hier die Faserstoffschicht aufgerissen ist, findet das Wasser Platz zum Durchtritt durch die erste Fläche. Die Wasserabfuhr aus der zweiten Fläche ist damit recht einfach. Dabei kann der Entwässerungsspalt bzw. der perforierte Teil der zweiten Fläche mit Vorteil nahe dem höchsten Punkt beginnen, damit das Wasser in Laufrichtung (der ersten Fläche) frei abfließt. Die durch die äußeren Preßkräfte stark zusammengedrückten Röllchen nehmen kein Wasser auf; die Rückbefeuchtung bleibt also gering.

Mit der Erfindung ist es möglich, eine Röllchenbildung auch ohne zusätzlich angelegten Unterdruck im Eindickungsbereich herbeizuführen.

Die einzudickende Suspension kann anfangs durchaus einen sehr geringen Feststoffgehalt, z.B. unter 1 % haben. Bei entsprechend guter Führung des Verfahrens läßt sich dennoch ein eingedickter Faserstoff mit einem Feststoffgehalt zwischen 20 und 35 % herstellen, was eine mengenmäßig bedeutsame Abscheidung von Wasser bedeutet. Aus diesen Gründen ist das Verfahren geeignet, beim Entwässern der Suspension unerwünschte Bestandteile mit gutem Effekt auszuwaschen.

Die Erfindung wird beschrieben und erläutert anhand von schematischen Zeichnungen. Dabei zeigen:
- Fig. 1: eine Entwässerungspresse mit Endlossieb schematisch;
- Fig. 2: eine weitere Entwässerungspresse mit Endlossieb;
- Fig. 3: eine weitere Entwässerungspresse mit zwei Endlossieben.

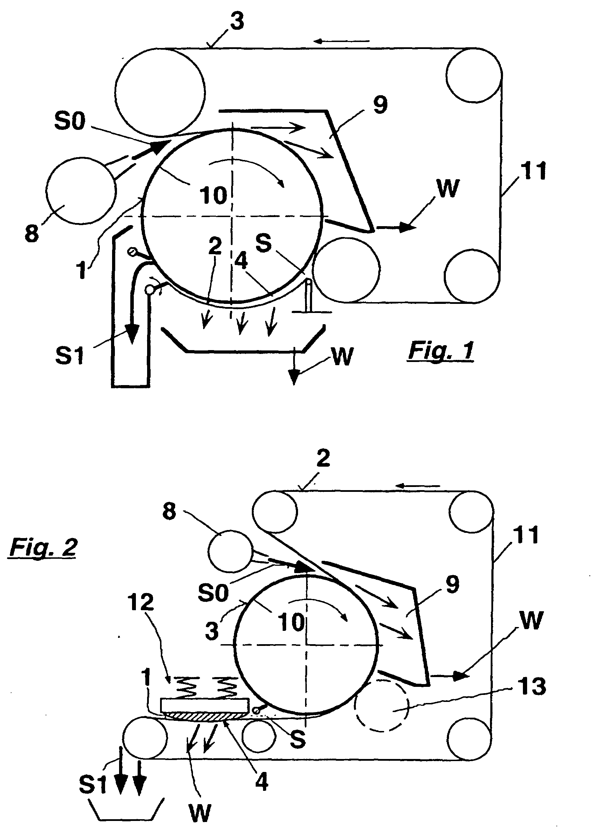

Die in der Fig. 1 schematisch gezeigte Entwässerungsvorrichtung gestattet sowohl die Eindickung der Faserstoffschicht S als auch eine Vorentwässerung, um die für die Faserstoffschicht S erfindungsgemäß erforderliche Konsistenz herzustellen. In vielen Fällen soll nämlich von einer relativ dünnen Suspension, z.B. zwischen 1 und 2 % ausgegangen werden, entweder weil sie wegen vorangegangener Prozeßschrifte so weit abgesenkt werden mußte, oder weil ein besonders effektives Waschverfahren durchgeführt werden soll, was bevorzugt mit einer niedrigen Ausgangsstoffdichte arbeitet. Die Entwässerungsvorrichtung enthält eine starre erste Fläche 1 auf einen undurchlässigen Zylinder 10 sowie eine flexible zweite Fläche 2, wobei sich wiederum zwischen diesen beiden Flächen ein Entwässerungsspalt 4 bildet. Die zweite Fläche 2 ist wasserdurchlässig. Ferner ist eine dritte Fläche 3 vorhanden, die auf einem umlaufenden Endlossieb 11 gebildet wird, welches den geschlossenen Zylinder 10 auf einem Teil seines Umfanges umschlingt. Über einen Stoffauflauf 8 wird der Dünnstoff SO zwischen die erste Fläche 1 und die dritte Fläche 3 in einem Freistrahl eingespritzt. Dabei und anschließend tritt ein beträchtlicher Teil des Wassers durch die dritte Fläche 3 aus und wird in den Wasserkasten 9 geschleudert. Dadurch entsteht auf der starren ersten Fläche 1 die Faserstoffschicht S mit der geforderten Mindeststoffdichte. Diese gelangt dann in den Entwässerungsspalt 4. Erfindungsgemäß hat die Faserstoffschicht S beim Eintritt in den Entwässerungsspalt 4 eine Stoffdichte von mindestens 4 %. Dabei kann durchaus ein Wert, der beträchtlich über 4 % liegt, erreicht werden. Die flexible zweite Fläche 2 kann auf einem Siebband liegen, das über ein Drehgelenk gegen die starre erste Fläche 1 angepreßt wird. Nach Austritt des Faserstoffes aus dem Entwässerungsspalt 4 wird er als Dickstoff S1 von der ersten Fläche 1 abgenommen, wobei z.B. ein Schaber mitwirken kann. Die Eindickung läßt sich weiter verstärken, wenn anstelle des undurchlässigen Zylinders 10 ein perforierter Zylinder verwendet wird.

Da die zweite Fläche 2 stillsteht, ergibt sich durch die Rotationsbewegung der ersten Fläche 1 eine Relativbewegung, welche die Entwässerungswirkung entscheidend verbessert. Besonders günstig ist es, die zweite Fläche 2 als flexibles, gespanntes Band auszuführen, insbesondere da sich dadurch stetige Druckverhältnisse im Entwässerungsspalt 4 einstellen lassen. Bei unterschiedlich dicker Faserstoffschicht kann ein solches Band ausweichen, und der Anpreßdruck ist leicht einstellbar. Grundsätzlich sind aber auch eine oder mehrere starre Flächen denkbar, sofern sie eine geeignete Form und Oberfläche haben. Nach Durchlaufen des Eindickungsbereiches läuft ein Dickstoff S1 von der Fläche 1, z.B. an einem Schaber ab. Wenn die zweite Fläche 2 ebenfalls wasserdurchlässig ist und für eine Wasserableitung von dieser Fläche gesorgt wird, kann der Endtrockengehalt weiter gesteigert werden. Je nach Wahl der Parameter können für den eingedickten Faserstoff höhere Stoffdichten - ca. 30 % - oder auch geringere - ca. 15 bis 20 % - erreicht werden.

Die in der Fig. 2 gezeigte Entwässerungsvorrichtung enthält eine ähnliche Vorentwässerung, wie die der Fig. 1. Unterschiedlich ist, daß die dritte Fläche 3 an dem geschlossenen Zylinder 10 gebildet wird und die flexible zweite Fläche 2 durch das Endlossieb 11, welches den Zylinder 10 teilweise umschlingt. Das Endlossieb 11 führt die Faserstoffschicht S vom Zylinder weg in den außerhalb des Zylinders liegenden Entwässerungsspalt 4. Dabei wird der Entwässerungsspalt 4 zwischen dem Endlossieb 11, welches die flexible zweite Fläche 2 enthält, gebildet und einem ortsfest angebrachten, gewölbten Schuh 12, der gegen das Endlossieb 11 gedrückt wird und die starre erste Fläche 1 bildet. Auch hier kann die Entwässerungswirkung durch Perforation des Zylinders erhöht werden. Eine Steigerung ist auch durch eine hier angedeutete Preßwalze 13 möglich.

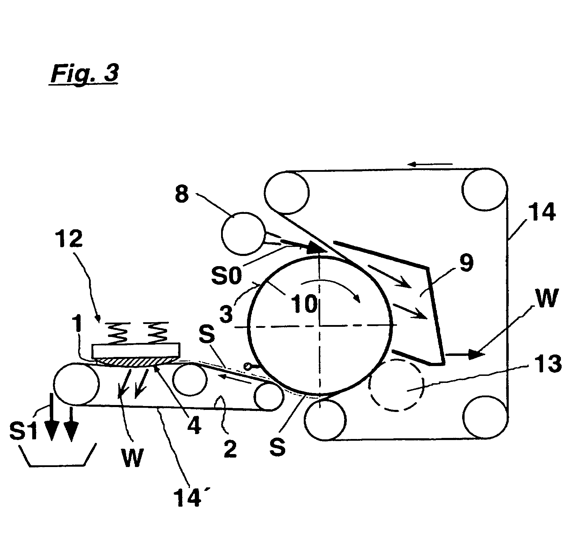

Man kann das Verfahren auch in der exemplarisch in Fig. 3 dargestellten Weise so variieren, daß die flexible zweite Fläche 2 aus zwei Endlossieben 14, 14' gebildet wird. Dann dient das erste Endlossieb 14 zusammen mit der Fläche 3 der Vorentwässerung, also zur Bildung der Faserstoffschicht S, während am zweiten Endlossieb 14' in Zusammenwirkung mit dem ortsfest angebrachten gewölbten Schuh 12 der Entwässerungsspalt 4 entsteht.

## Patentansprüche

1. Verfahren zum Eindicken einer Faserstoffsuspension, welches zwischen zwei Flächen durchgeführt wird, und zwar:
- einer starren ersten Fläche (1) und
- einer flexiblen zweiten Fläche (2),
von denen wenigstens eine wasserdurchlässig ist,
die einen konvergierenden Entwässerungsspalt (4) bilden, sich relativ zueinander bewegen und gegeneinander gedrückt werden,
wonach der eingedickte Faserstoff aus dem Bereich beider Flächen (1, 2) entfernt wird,
**gekennzeichnet durch**,
eine dem Eindicken vorangehende Vorentwässerung, die zwischen einer der Flächen (1 oder 2) und einer dritten Fläche (3) erfolgt, von denen wenigstens eine wasserdurchlässig ist,
wobei beide an der Vorentwässerung beteiligten Flächen mit gleicher Geschwindigkeit bewegt werden und
wobei aus einem Dünnstoff (SO) auf einer der beiden Flächen (1 oder 2) die zu entwässernde Suspension gebildet wird, die als Faserstoffschicht (S) mit einem Feststoffgehalt von wengistens 4 % anschließend **durch** die Bewegung der sie berührenden Fläche mittelbar oder unmittelbar in den konvergierenden Entwässerungsspalt (4) gelangt, der zwischen der sie berührenden Fläche und einer der beiden Flächen (1 oder 2) gebildet wird, wo sie eingedickt wird.

2. Verfahren nach Anspruch 1,
**dadurch gekennzeichnet,**
**daß** die Faserstoffschicht (S) bei Eintritt in den Entwässerungsspalt (4) einen Feststoffgehalt von wenigstens 8 % aufweist.

3. Verfahren nach Anspruch 1 oder 2,
**dadurch gekennzeichnet,**
**daß** die zweite Fläche (2) perforiert ist.

4. Verfahren nach Anspruch 3,
**dadurch gekennzeichnet,**
**daß** die zweite Fläche (2) ein Siebgewebe ist.

5. Verfahren nach Anspruch 1 oder 2,
**dadurch gekennzeichnet,**
**daß** die zweite Fläche (2) undurchlässig ist.

6. Verfahren nach einem der voranstehenden Ansprüche,
**dadurch gekennzeichnet,**
**daß** die zweite Fläche (2) zur Faserstoffseite hin eine reibkrafterhöhende Oberfläche hat.

7. Verfahren nach einem der voranstehenden Ansprüche,
**dadurch gekennzeichnet,**
**daß** die erste Fläche (1) wasserdurchlässig ist.

8. Verfahren nach Anspruch 1,
**dadurch gekennzeichnet,**
**daß** der Dünnstoff (SO) einen Feststoffgehalt von höchstens 2 % hat.

9. Verfahren nach einem der voranstehenden Ansprüche,
**dadurch gekennzeichnet,**
**daß** die bei der Vorentwässerung gebildete Faserstoffschicht (S) ein Flächengewicht von mindestens 40 g/m² (otro).

10. Verfahren nach einem der voranstehenden Ansprüche,
**dadurch gekennzeichnet,**
**daß** die erste Fläche (1) zylinderförmig ist.

11. Verfahren nach Anspruch 10,
**dadurch gekennzeichnet,**
**daß** die erste Fläche eine horizontal angeordnete, zylindrische Siebtrommel ist.

12. Verfahren nach einem der voranstehenden Ansprüche,
**dadurch gekennzeichnet,**
**daß** am Ende des Entwässerungsspaltes (4) eine Saugzone folgt, in der durch an die perforierte Fläche von der nicht mit Stoff belegten Seite her Unterdruck angelegt ist.

13. Verfahren nach einem der voranstehenden Ansprüche,
**dadurch gekennzeichnet,**
**daß** die gespannte, flexible Bahn im wesentlichen raumfest angebracht ist und die Relativbewegung nur durch die Bewegung der perforierten Fläche auftritt.

14. Verfahren nach einem der Ansprüche 1 bis 13,
**dadurch gekennzeichnet,**
**daß** absolut gesehen das flexible Band mit einer Geschwindigkeit von weniger als 10 m/Min. bewegt wird.

15. Verfahren nach Anspruch 10,
**dadurch gekennzeichnet,**
**daß** das flexible Band auf seiner Bewegung an einer Reinigungsvorrichtung vorbeiläuft.

## Claims

1. A method for thickening a pulp suspension which is passed through between two surfaces, namely:
- a rigid first surface (1) and
- a flexible second surface (2),
at least one of which is water-permeable,
which form a converging dewatering nip (4), move relative to one another and are pressed against each other,
whereafter the thickened pulp is removed from the region of both surfaces (1, 2),
**characterised by**
a preliminary dewatering preceding the thickening, which dewatering takes place between one of the surfaces (1 or 2) and a third surface (3), at least one of which is water-permeable,
both surfaces which participate in the preliminary dewatering being moved at the same speed and
the suspension to be dewatered being formed from a thin stock (SO) on one of the two surfaces (1 or 2), which suspension then passes directly or indirectly into the converging dewatering nip (4) as a pulp layer (S) with a solids content of at least 4% due to the movement of the surface contacting it, which nip is formed between the surface contacting it and one of the two surfaces (1 or 2), where it is thickened.

2. A method according to Claim 1,
**characterised in that**
the pulp layer (S) has a solids content of at least 8% on entering the dewatering nip (4).

3. A method according to Claim 1 or 2,
**characterised in that**
the second surface (2) is perforated.

4. A method according to Claim 3,
**characterised in that**
the second surface (2) is a screen fabric.

5. A method according to Claim 1 or 2,
**characterised in that**
the second surface (2) is non-permeable.

6. A method according to one of the preceding claims,
**characterised in that**
the second surface (2) has a friction-increasing surface towards the pulp side.

7. A method according to one of the preceding claims,
**characterised in that**
the first surface (1) is water-permeable.

8. A method according to Claim 8,
**characterised in that**
the thin stock (SO) has a solids content of at most 2%.

9. A method according to one of the preceding claims,
**characterised in that**
the pulp layer (S) formed upon the preliminary dewatering [has] a weight per unit surface area of at least 40 g/m² (oven-dry).

10. A method according to one of the preceding claims,
**characterised in that**
the first surface (1) is cylindrical.

11. A method according to Claim 10,
**characterised in that**
the first surface is a horizontally arranged, cylindrical sieve drum.

12. A method according to one of the preceding claims,
**characterised in that**
a suction zone follows the end of the dewatering nip (4), in which zone a reduced pressure is applied against the perforated surface from the side not covered with stock.

13. A method according to one of the preceding claims,
**characterised in that**
the stretched, flexible web is attached to be substantially stationary and the relative movement occurs only due to the movement of the perforated surface.

14. A method according to one of Claims 1 to 13,
**characterised in that**
viewed absolutely, the flexible belt is moved at a speed of less than 10 m/min.

15. A method according to Claim 10,
**characterised in that**
the flexible belt upon its movement passes a cleaning device.

## Revendications

1. Procédé pour l'épaississement d'une suspension de matière fibreuse qui est effectué entre deux surfaces, à savoir :
- une première surface (1) rigide et
- une seconde surface (2) flexible,
dont au moins une est perméable à l'eau,
qui forment une fente d'égouttage (4) convergente, qui se déplacent l'une par rapport à l'autre et sont appuyées l'une contre l'autre,
après quoi la matière fibreuse épaissie est enlevée dé la zone des deux surfaces (1, 2),
**caractérisé par**
un égouttage préalable précédant l'épaississement, qui s'effectue entre l'une des surfaces (1 ou 2) et une troisième surface (3), dont au moins une est perméable à l'eau,
les deux surfaces concernées par l'égouttage préalable étant déplacées avec une même vitesse et,
la suspension à égoutter étant formée à partir d'une substance mince (SO) sur l'une des deux surfaces (1 ou 2), laquelle suspension parvient en tant que couche fibreuse (S) avec une teneur en solide d'au moins 4 % ensuite par le déplacement de la surface qui la touche indirectement ou directement dans la fente d'égouttage (4) convergente, qui est formée entre la surface qui la touche et l'une des deux surfaces (1 ou 2), où elle est épaissie.

2. Procédé selon la revendication 1,
**caractérisé**
**en ce que** la couche fibreuse (5) présente lors de son entrée dans la fente d'égouttage (4) une teneur en solide d'au moins 8 %.

3. Procédé selon la revendication l'ou 2,
**caractérisé**
**en ce que** la seconde surface (2) est perforée.

4. Procédé selon la revendication 3,
**caractérisé**
**en ce que** la seconde surface (2) est un tissu de tamis.

5. Procédé, selon la revendication 1 ou 2,
**caractérisé**
**en ce que** la seconde surface (2) est imperméable.

6. Procédé selon l'une quelconque des revendications précédentes,
**caractérisé**
**en ce que** la seconde surface (2) a une surface augmentant la force de frottement en direction du côté de la matière fibreuse.

7. Procédé selon l'une quelconque des revendications précédentes,
**caractérisé**
**en ce que** la première surface (1) est perméable à l'eau.

8. Procédé selon la revendication 1,
**caractérisé**
**en ce que** la matière mince (SO) a une teneur en solide de 2 % maximum.

9. Procédé selon l'une quelconque des revendications précédentes,
**caractérisé**
**en ce que** la couche fibreuse (S) formée lors de l'égouttage préalable a une masse surfacique d'au moins 40 g/m² (séché à l'étuve).

10. Procédé selon l'une quelconque des revendications précédentes,
**caractérisé**
**en ce que** la première surface (1) a une forme cylindrique.

11. Procédé selon la revendication 10,
**caractérisé**
**en ce que** la première surface est un tambour de tamisage disposé horizontalement et cylindrique.

12. Procédé selon l'une quelconque des revendications précédentes,
**caractérisé**
**en ce que** l'extrémité de la fente d'égouttage (4) est suivie d'une zone d'aspiration, dans laquelle une dépression est appliquée sur la surface perforée à partir du côté non recouvert de tissu.

13. Procédé selon l'une quelconque des revendications précédentes,
**caractérisé**
**en ce que** la bande tendue et flexible est placée de façon sensiblement stabilisée et le déplacement relatif n'apparaît que par le déplacement de la surface perforée.

14. Procédé selon l'une quelconque des revendications 1 à 13,
**caractérisé**
**en ce que** la bande flexible est déplacée, vu dans l'absolu, à une vitesse de moins de 10 m/min.

15. Procédé selon la revendication 10,
**caractérisé**
**en ce que** la bande flexible passe lors de son déplacement devant un dispositif de nettoyage.
